# FASCICULE DE BREVET EUROPEEN

(11) **EP 1 586 828 B1**
(45) Date de publication et mention de la délivrance du brevet: **11.01.2012**
(21) Numéro de dépôt: 05358002.3
(22) Date de dépôt: 23.02.2005
(51) Int. Cl.: F24J 2/20, F24J 2/24, F24J 2/52

(54) **Dispositif de chauffage solaire**
Solarheizungsvorrichtung
Solar heating device

(30) Priorité: 16.04.2004 FR 0404042
(43) Date de publication de la demande: 19.10.2005
(73) Titulaire: TMW, 75017 Paris (FR)
(72) Inventeur: Vanquaethem, Alain, 13840 Rognes (FR)
(74) Mandataire: Domange, Maxime

(56) Documents cités:
- EP-A- 0 028 982
- FR-A1- 2 355 254
- FR-A1- 2 379 775
- US-A- 3 868 945
- US-A- 4 206 748

## Description

La présente invention concerne un dispositif de chauffage solaire d'un fluide tel que le panneau connu du document EP-0 028 982. Le dispositif selon l'invention est particulièrement simple à installer et à déplacer.

Ce dispositif de chauffage solaire est particulièrement adapté, mais ce de façon non limitative, pour réchauffer l'eau d'une piscine.

Plus précisément, l'invention propose un dispositif de chauffage pouvant être facilement déplacé et installé selon plusieurs positions stables d'inclinaisons différentes par rapport à l'horizontale.

A cet effet, l'invention concerne un dispositif de chauffage solaire relié à un réseau de circulation d'un fluide, par exemple à un réseau d'eau. Ce réseau qui peut être un réseau fermé, peut être utilisé pour alimenter et/ou évacuer l'eau circulant dans le dispositif. Ce dispositif comporte :
- une plaque de polymère alvéolaire de couleur sombre et comportant des canaux de circulation du fluide, ces canaux étant sensiblement parallèles entre eux ;
- deux collecteurs de connexion rigides reliés de façon étanche, respectivement à l'entrée et à la sortie desdits canaux de circulation, et adaptés à rigidifier la plaque de polymère alvéolaire transversalement par rapport aux canaux ; et
- un support constitué par une structure pivotante et repliable le long de ladite plaque, ce support comportant un collecteur de liaison rigide adapté à raccorder, par des moyens d'articulation étanche du support, l'un des collecteurs de connexion précité au réseau de circulation de fluide.

L'inclinaison de la plaque de polymère peut être modifiée en faisant varier l'angle entre le support pivotant et la plaque de polymère.

Le dispositif de chauffage comporte ainsi une structure stable autoporteuse conférée par les collecteurs de connexion et de liaison rigides. Il est léger, facilement transportable et très simple d'utilisation car son installation ne nécessite pas la fixation de la plaque de polymère alvéolaire sur un bâti.

Par ailleurs, lorsque le support pivotant est replié le long de la plaque de polymère, grâce aux moyens d'articulation étanches, l'encombrement du dispositif de chauffage est minimum, ce qui facilite son rangement et son déplacement.

Dans un mode préféré de réalisation, le support comporte deux collecteurs de liaison rigides. Chacun d'entre eux est raccordé :
- par une première extrémité, à une extrémité différente d'un premier collecteur de connexion, par des moyens d'articulation étanche du support ; et
- par une deuxième extrémité, à un collecteur de jonction, faisant partie du support et relié au réseau de circulation de fluide.

Le collecteur de jonction et le deuxième collecteur de connexion constituent une base stable dudit dispositif de chauffage.

Préférentiellement, le support est adapté à conférer à la plaque de polymère au moins deux positions stables et d'inclinaisons différentes par rapport à l'horizontale.

L'inclinaison de la plaque alvéolaire par rapport à l'horizontale peut ainsi être ajustée par réglage du support.

La plaque peut ainsi être orientée perpendiculairement aux rayons du soleil pour optimiser son rendement.

Dans un mode préféré de réalisation, le dispositif de chauffage selon l'invention comporte des moyens de réglage adaptés à donner au moins deux valeurs prédéterminées à l'angle défini entre la plaque de polymère et l'horizontale.

Ces valeurs prédéterminées sont préférentiellement choisies parmi des valeurs optimales d'inclinaison de la plaque pour son utilisation dans un lieu d'exposition à une latitude donnée, et/ou à une saison donnée.

Ces moyens de réglage permettent ainsi de définir précisément l'inclinaison de la plaque de polymère, ce qui en permet une installation optimale en fonction de la saison et/ou de la latitude du lieu d'exposition.

Dans un mode préféré de réalisation, les moyens d'articulation étanche permettant au support de pivoter, sont constitués par un joint tournant étanche reliant un collecteur de connexion et un collecteur de liaison constitués par des tubes en matière polymère thermoplastique.

Plus précisément, et de façon préférée, ce joint tournant étanche comporte un tube coudé ou un Té en matière polymère thermoplastique dont le diamètre est différent de 0,1 mm au plus du diamètre desdits collecteurs. L'étanchéité entre le joint tournant et les collecteurs est réalisée par du ruban en polytétrafluoroéthylène (PTFE).

Cette variante permet ainsi d'obtenir une structure démontable et étanche jusqu'à environ 2 bars de pression interne même lorsque l'on procède à une rotation du joint tournant par rapport au collecteur de connexion.

En variante, le joint tournant étanche peut être remplacé par un tuyau souple.

Dans une variante préférée de réalisation de l'invention, le support est télescopique.

L'inclinaison de la plaque est ainsi obtenue en faisant varier la longueur du support.

Cette variante de réalisation est particulièrement avantageuse car elle permet d'obtenir un encombrement au sol constant.

Préférentiellement, le dispositif comporte des moyens supplémentaires de rigidification de la plaque de polymère alvéolaire. Ces moyens rigidifient principalement la plaque dans sa direction longitudinale, c'est-à-dire perpendiculairement aux collecteurs de connexion, rigides en eux-mêmes.

Ces moyens de rigidification supplémentaires sont particulièrement utiles pour éviter l'affaissement du dispositif de chauffage lorsque celui-ci est exposé au plein soleil alors que le fluide ne circule pas.

Grâce à ces moyens de rigidification supplémentaires, la plaque de polymère peut-être de faible épaisseur (par exemple six millimètres) et présenter d'excellentes capacités de chauffage.

Dans le mode préféré de réalisation, les collecteurs de connexion comportent une rainure débouchante dans laquelle est enfoncée la plaque de polymère et des moyens pour assurer l'étanchéité entre cette rainure et la plaque.

Dans un mode préféré de fabrication du dispositif, on introduit un mandrin à l'intérieur du collecteur, ce mandrin comportant une entaille aux dimensions sensiblement égales à celles de la rainure.

Puis, on réchauffe la partie du collecteur située en vis-à-vis de l'entaille (c'est-à-dire la partie destinée à recevoir la rainure) jusqu'à une température comprise entre la température de transition vitreuse et la température de fusion de ces collecteurs en polymère thermoplastique.

Puis on presse une lame adaptée à la forme de la rainure au regard de la partie préchauffée et de l'entaille du mandrin jusqu'à obtenir cette rainure.

Dans ce mode préféré de fabrication, l'entaille comporte ainsi deux rabats dirigés vers l'intérieur du collecteur, ce qui permet d'augmenter la surface de contact avec la plaque de polymère et d'améliorer considérablement l'étanchéité et la solidité du dispositif.

La fabrication d'un tel dispositif est très simple. Ce mode de réalisation renforce en outre la rigidité et la solidité du dispositif au niveau de la jonction de la plaque de polymère et des collecteurs, ce qui permet ainsi de fixer le dispositif notamment au sol en prenant appui sur les collecteurs.

Afin de renforcer la durabilité de l'assemblage entre la plaque de polymère et la rainure, les moyens d'étanchéité comportent des éléments incompressibles d'épaisseur constante mélangés à une colle étanche, disposés de part et d'autre de ladite plaque.

Ces éléments incompressibles sont par exemple constitués par du verre tissé incompressible ou des microbilles. Préférentiellement leur épaisseur constante est de l'ordre de 0,2 mm.

La colle utilisée peut notamment être une résine époxy ou une colle polyuréthane.

Pour renforcer encore l'assemblage entre la plaque alvéolaire et au moins un collecteur de connexion, on peut cercler ce collecteur en perçant la plaque alvéolaire, à proximité du collecteur, pour permettre le passage d'un ou plusieurs moyens de cerclage.

Ce moyen de cerclage peut être constitué par un fil d'acier, ou préférentiellement par une mèche de fibre de carbone.

Si le perçage est réalisé dans un canal de circulation du fluide, le moyen de cerclage peut être imprégné de résine époxy pour assurer l'étanchéité au niveau du perçage.

Dans un mode préféré de réalisation, le dispositif de chauffage selon l'invention comporte des moyens de fixation, notamment au sol, d'au moins un collecteur de connexion et/ou du support.

Ces moyens de fixation permettent ainsi d'éviter que le dispositif ne bascule en cas de vent important.

Dans un mode préféré de réalisation, le dispositif de chauffage selon l'invention comporte un moyen de régulation de la température du fluide, relié à au moins un des deux collecteurs de connexion, utilisé, dans ce mode, pour l'arrivée de fluide froid à partir du réseau de circulation.

Ce moyen de régulation permet de refroidir le fluide réchauffé par la plaque de polymère, et ainsi d'éviter que du fluide brûlant ne sorte du dispositif selon l'invention. Cette caractéristique est notamment importante lorsque le dispositif est utilisé pour réchauffer de l'eau directement déversée dans une piscine.

Préférentiellement, le moyen de régulation est réglable et permet de choisir la température du fluide en sortie du dispositif selon l'invention.

Préférentiellement, le moyen de régulation se déclenche automatiquement lorsque la température du fluide à l'intérieur du dispositif dépasse une valeur prédéterminée.

L'invention concerne aussi un système de chauffage solaire constitué par plusieurs dispositifs de chauffage tels que décrits brièvement ci-dessus et reliés entre eux par des embouts étanches.

Ce système de chauffage est ainsi modulaire à l'infini.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1 représente un dispositif de chauffage conforme à l'invention dans une première variante de réalisation ;
- la figure 2 représente un détail du dispositif de chauffage de la figure 1 ;
- la figure 3 représente un dispositif de chauffage conforme à l'invention dans une deuxième variante de réalisation ;
- la figure 4 représente un dispositif de chauffage dans un mode particulier de réalisation ;
- la figure 5 représente un système de chauffage et son utilisation conformes à la présente invention ;
- la figure 6 représente un dispositif de chauffage conforme à l'invention dans une troisième variante de réalisation ;
- les figures 7A et 7B représentent des étapes de montage du joint tournant dans le dispositif de la figure 6 ;
- les figures 8 à 12 représentent différentes étapes d'un procédé de fabrication d'un dispositif de chauffage dans un mode préféré de réalisation de l'invention ; et
- la figure 13 représente une vue arrachée d'un collecteur longitudinal télescopique dans une variante du dispositif de chauffage de la figure 6.

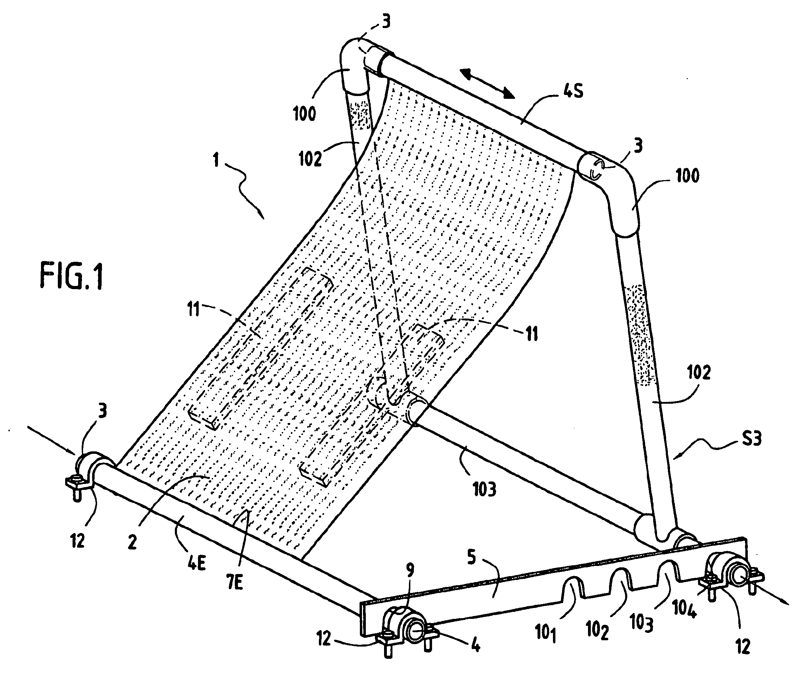

La **figure 1** représente un dispositif de chauffage solaire 1 d'un fluide conforme à la présente invention dans une première variante de réalisation.

Ce dispositif 1 est relié à un réseau de circulation d'eau non représenté.

Le dispositif 1 de chauffage comporte une plaque 2 de polymère alvéolaire de couleur sombre, préférentiellement une feuille noire (ou bleu-vert foncé) de polypropylène alvéolaire.

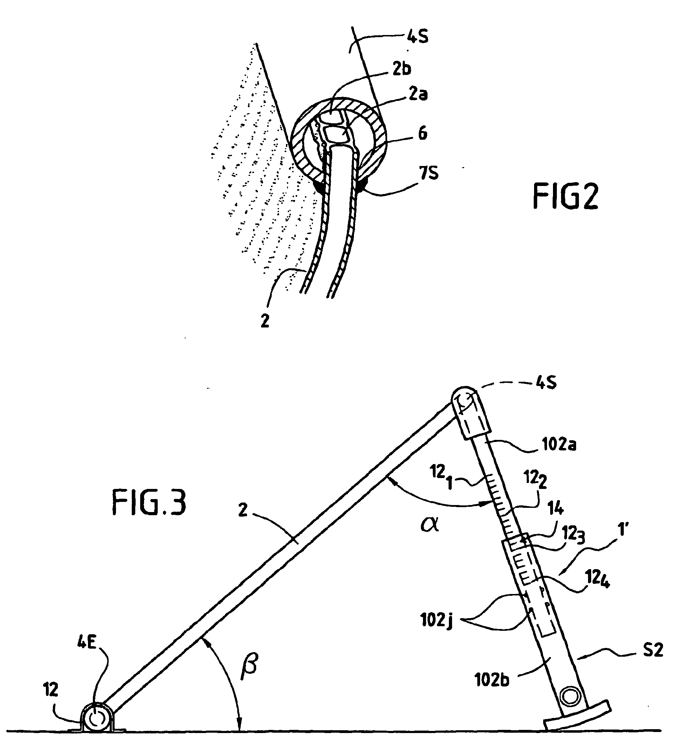

Cette plaque 2 de polymère alvéolaire comporte des canaux 2a, 2b de circulation d'un fluide sensiblement parallèles entre eux, représentés à la **figure 2****.**

La plaque 2 de polymère comporte aussi deux collecteurs de connexion 4E, 4S, rigides, respectivement reliés à l'entrée et à la sortie des canaux 2a, 2b de circulation.

Dans ce mode de réalisation en effet, le collecteur de connexion inférieur (lorsque celui-ci est dans ses conditions normales d'utilisation) 4E reçoit l'eau en provenance du réseau.

Ces collecteurs de connexion 4E, 4S rigidifient la plaque 2, transversalement par rapport aux canaux 2a, 2b de circulation.

L'homme du métier comprendra que, bien évidemment, l'entrée du fluide peut être réalisée également par le collecteur de connexion situé sur la partie haute du dispositif, à savoir le collecteur de connexion référence 4S sur la figure 1.

En variante, la plaque alvéolaire 2 peut être utilisée avec ses canaux horizontaux, les collecteurs de connexion étant tournés de 90° par rapport à ceux de à la figure 1.

Mais l'homme du métier comprendra que l'utilisation préférée est celle de la figure 1, car l'alimentation en liquide par le collecteur de connexion 4E inférieur permet de chasser plus facilement les bulles de gaz (qui ont tendance à monter) qui peuvent être présentes dans les canaux de circulation 2a, 2b.

Dans le mode préféré de réalisation de l'invention décrit ici, les collecteurs transversaux 4E et 4S comportent une rainure 6 débouchante représentée à la figure 2 dans laquelle est enfoncée la plaque 2 de polymère.

Bien entendu, la dimension de la rainure est adaptée à la largeur et à l'épaisseur de la plaque 2.

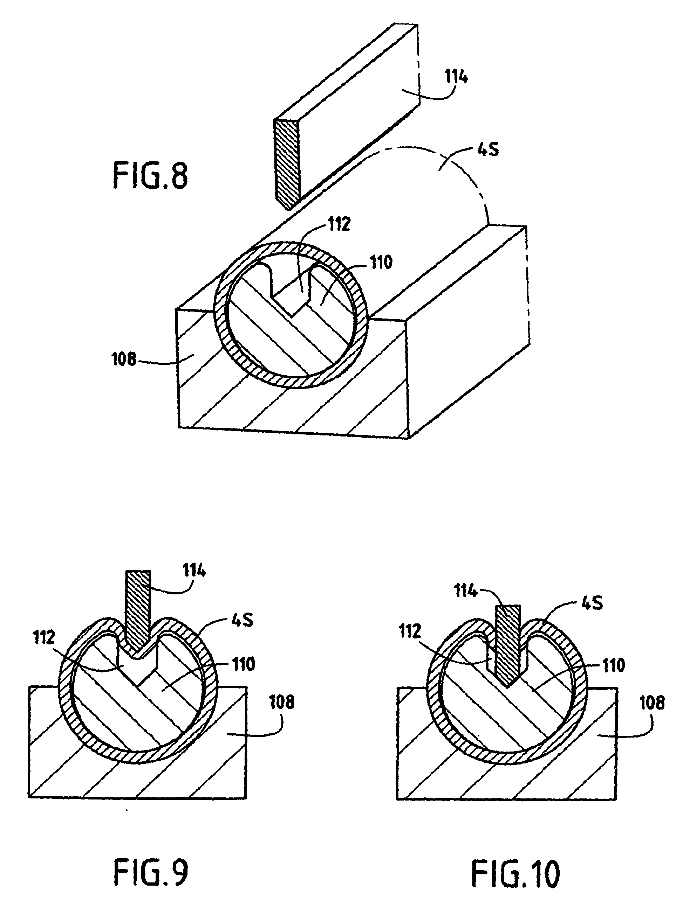

Nous allons maintenant décrire en référence aux **figures 8 à 12** les principales étapes d'un procédé de fabrication de la rainure dans un des tubes collecteurs de connexion 4E, 4S conformément à l'invention.

Dans le mode de réalisation décrit ici, les collecteurs de connexion sont des tubes en matière thermoplastique.

Un tube (par exemple 4S) est placé sur un support 108 comportant une forme complémentaire à celle du collecteur.

Puis, on introduit un mandrin 110 dans le tube 4S, ce mandrin comportant une entaille 112 qui sera utilisée pour déformer le tube collecteur afin d'obtenir la rainure 6.

Ensuite, on réchauffe la partie du tube collecteur située en vis-à-vis de l'entaille 112 au-delà de la température de transition vitreuse du tube en polymère sans atteindre sa température de fusion.

Puis, on presse une lame 114 adaptée à la forme de la rainure 6 que l'on souhaite obtenir, et à la forme de l'entaille 112 pratiquée dans le mandrin 110.

Sur la **figure 9**, on s'aperçoit que la partie préchauffée du tube collecteur se déforme, jusqu'à une rupture représentée à la **figure 10**.

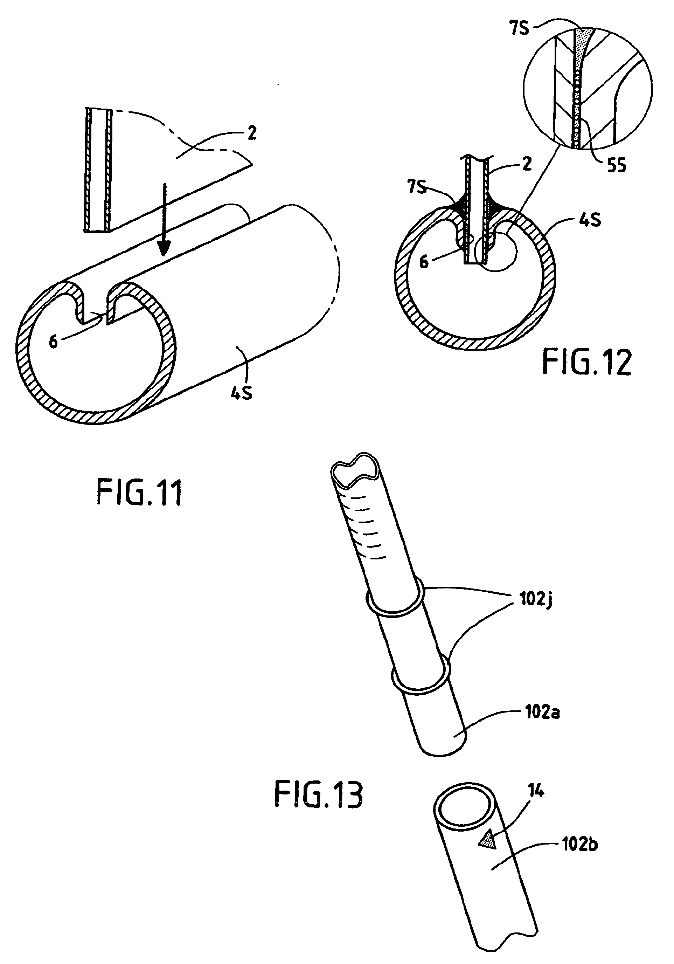

On obtient ainsi, comme représenté à la **figure 11**, une rainure 6 avec deux rabats rentrant vers l'intérieur du tube collecteur, cette rainure 6 étant très légèrement supérieure à l'épaisseur de la plaque 2.

Préférentiellement, la largeur de la rainure 6 est supérieure à l'épaisseur de la plaque 2 de 0,4 mm.

D'autre part, la plaque alvéolaire 2 est préparée en vue de son collage sur la surface interne des rabats de la rainure 6. Ces collages sont réalisés à température ambiante supérieure à 15°C, sous hygrométrie standard, après émerisage, dégraissage et flammage des surfaces de collage pour maximiser la résistance des assemblages.

Comme représenté à la **figure 12**, la plaque alvéolaire 2 ainsi traitée est insérée puis collée aux parties rabattues de la rainure 6 ayant subi le même traitement pour assurer l'étanchéité entre ces deux éléments. Par exemple, on peut utiliser une colle sur toutes les zones de jonction 7S entre la plaque 2 et le collecteur de connexion 4S constituée par une résine époxy ou une colle polyuréthane du type de celles disponibles en cartouches standard pour pistolets d'extrusion.

Dans le mode préféré de réalisation décrit ici, celle colle est mélangée avec des microbilles 55 de 0,2mm de diamètre. Ceci permet de garantir que la plaque alvéolaire 2 et chaque partie rabattue de la rainure 6 sont à une distance constante de 0,2 mm sur toute la zone de collage.

Les microbilles 55 peuvent être remplacées par du verre tissé incompressible de 0,2 mm.

Dans le mode de réalisation de la figure 1 :
- le collecteur de connexion inférieur 4E, comporte une extrémité ouverte 3 et une extrémité fermée 4 ; et
- le collecteur de connexion supérieur 4S comporte deux extrémités ouvertes 3.

Dans le mode de réalisation préféré décrit en référence à la figure 1, un fluide, par exemple de l'eau, peut être introduit dans l'extrémité ouverte 3 du collecteur de connexion inférieur 4E.

L'extrémité 4 de ce collecteur 4E étant fermée, le fluide traverse la plaque 2 de polymère alvéolaire en empruntant les canaux 2a, 2b de circulation et débouche dans le collecteur transversal de sortie 4S dont il ressort par les deux extrémités ouvertes 3.

Le fluide emprunte alors deux collecteurs de liaison étanches 102 raccordés par des moyens d'articulation étanches 100 au collecteur de connexion supérieur 4S.

Les deux collecteurs de liaison étanches sont reliés, par leur deuxième extrémité, à un collecteur de jonction 103 permettant d'évacuer l'eau du dispositif 1 vers le réseau d'eau.

Les deux collecteurs de liaison 102 et le collecteur de jonction 103 constituent un support S3 du dispositif de chauffage 1. Il s'agit d'une structure pivotante et repliable le long de la plaque alvéolaire 2, grâce à l'utilisation des moyens d'articulation 100.

La plaque 2 de polymère alvéolaire constitue un panneau de chauffage solaire du fluide qui la traverse.

Dans le mode détaillé de réalisation décrit ici, la plaque 2 de polypropylène alvéolaire noire (ou sombre) est protégée contre les rayons ultraviolets et possède les dimensions suivantes :
- longueur, à savoir distance séparant les collecteurs de connexion 4E, 4S:1,60m;
- largeur : 1,20 m ; et
- épaisseur : 6 mm.

Les collecteurs de connexion 4E, 4S peuvent être réalisés par des tubes PVC de 40 mm de diamètre et de longueur égale à 1,30 m.

Pour ces dimensions, le dispositif de chauffage pèse environ 8 kg, ce qui le rend particulièrement simple à installer et à déplacer.

Quoi qu'il en soit, ces collecteurs de connexion 4E, 4S sont adaptés à rigidifier transversalement, c'est-à-dire dans le sens de la largeur, la plaque 2.

Dans le mode préféré de réalisation décrit ici, le support S3 est adapté à conférer à la plaque 2 au moins deux positions stables et d'inclinaison différente par rapport à l'horizontale.

Dans la suite de la description, on appellera α l'angle variable défini entre la plaque alvéolaire 2 et le support S3 (voir figure 3).

Dans un mode préféré de cette première variante de réalisation, le dispositif 1 de chauffage solaire comporte en outre une crémaillère 5 adaptée à donner au moins deux valeurs prédéterminées à l'angle α.

La crémaillère 5 comporte, dans le mode de réalisation décrit ici, une première encoche 9 légèrement supérieure au diamètre du collecteur de connexion inférieur 4E et plusieurs encoches 10₁, 10₂, 10₃, 10₄ légèrement supérieures au diamètre du collecteur de jonction 103.

Les quatre encoches 10₁ à 10₄ permettent ainsi de définir quatre positions prédéterminées d'un angle β entre la plaque de polymère 2 et l'horizontale (voir figure 3).

Dans le mode préféré de réalisation, les quatre valeurs prédéterminées de l'angle β sont 35.5°, 52°, 59°, 75,5°.

Ces valeurs permettent respectivement une utilisation optimale du capteur décrit à la figure 1 :
- en été, en Europe du Nord (latitude 51°) ;
- au printemps et en automne, en Europe du Sud (latitude 44°) ;
- au printemps et en automne, en Europe du Nord ; et
- en hiver pour la mise hors-gel de la piscine, en Europe du Sud.

La crémaillère 5 peut être réalisée en aluminium et comporter un profil rectangulaire de 10 mm sur 60 mm.

Sur la figure 1, une seule crémaillère est représentée pour simplification mais on utilisera préférentiellement deux crémaillères identiques disposées de part et d'autre de la plaque 2 sur le collecteur de connexion inférieur 4E et le collecteur de jonction 103.

Dans le mode préféré de réalisation représenté ici, la plaque 2 de chauffage comporte des moyens 11 supplémentaires de rigidification, préférentiellement longitudinaux, ces moyens 11 supplémentaires de rigidification empêchant la plaque de chauffage 2 de s'affaisser, notamment en cas de forte chaleur.

Préférentiellement, le dispositif de chauffage 1 selon l'invention comporte des moyens 12 de fixation du collecteur de connexion inférieur 4E et du support S3 sur une surface fixe.

Dans le mode préféré de réalisation décrit en référence à la figure 1, ces moyens 12 de fixation sont constitués par des cavaliers pouvant se planter dans le sol.

Nous allons maintenant décrire, en référence à **la** **figure 3****,** un dispositif de chauffage 1' conforme à l'invention dans une deuxième variante de réalisation.

Dans cette deuxième variante de réalisation, le support S2 de la plaque 2 de polymère alvéolaire est télescopique, les collecteurs de liaison (102) étant télescopiques.

Ils sont par exemple, comme représenté à la **figure 13**, constitués par deux collecteurs longitudinaux 102a, 102b dont l'un est de diamètre légèrement inférieur à l'autre.

Sur le tube télescopique de plus petit diamètre, on réalise un ou plusieurs moyens d'étanchéité 102j constitués d'une gorge dans laquelle est inséré, de façon connue, un joint torique.

La stabilité du support S3 est assurée par la friction du joint torique sur la face interne du tube de plus grand diamètre 102B.

Préférentiellement, le recouvrement des deux tubes doit être suffisant pour permettre une variation angulaire β de 35,5° à 75,5° par rapport à l'horizontale.

La longueur du support S2 est ainsi variable et peut prendre en particulier quatre longueurs.

Le réglage de la longueur du support S2 s'effectue par exemple en utilisant un index 14 dessiné sur le premier collecteur longitudinal 102b, transparent dans ce mode de réalisation. Cet index 14 peut être mis en vis-à-vis de quatre repères visuels 12₁ à 12₄ dessinés sur le deuxième collecteur longitudinal 102a conférant à l'angle β les valeurs préférées précitées, à savoir 35.5°, 52°, 59°, 75,5°.

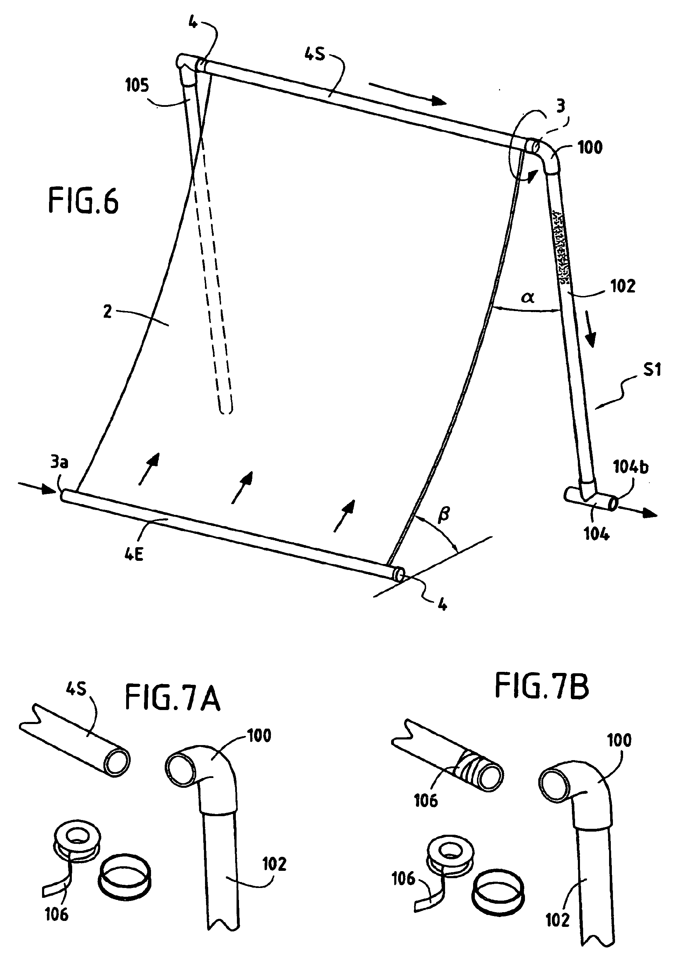

Nous allons maintenant décrire en référence à la **figure 6** un dispositif de chauffage conforme à l'invention dans une troisième variante de réalisation.

Dans le mode de réalisation de la figure 6, les deux collecteurs de connexion 4E, 4S comportent une extrémité ouverte 3 et une extrémité fermée 4.

Préférentiellement et afin d'équilibrer les pressions à l'intérieur du dispositif, l'extrémité fermée 4 du collecteur supérieur 4S est placée en vis-à-vis de l'extrémité ouverte 3 du collecteur inférieur 4E.

Dans cette variante, le support S1 est constitué par un seul collecteur de liaison 102 rigide, relié par une première extrémité à une l'extrémité ouverte 3 du collecteur de connexion supérieur 4S au moyen d'un joint tournant étanche 100.

Ce support S1 comporte également un montant 105 sensiblement parallèle au collecteur de liaison 102.

Dans ce mode de réalisation, l'eau s'évacue préférentiellement du dispositif 1 par un raccord 104 reliant directement l'unique collecteur de jonction 102 au le réseau d'eau.

La réalisation du joint tournant étanche 100 va maintenant être décrite en référence aux figures 7A et 7B.

Dans ce mode préféré de réalisation, le joint tournant étanche 100 est constitué par un tube coudé en polymère thermoplastique dont le diamètre intérieur est supérieur de 0,1 mm au plus du diamètre extérieur du collecteur de connexion 4S et du collecteur longitudinal 102 qu'il raccorde.

Dans ce mode préféré de fabrication, les surfaces des collecteurs 4S, 102 et du joint étanche 100 qui sont amenées à se trouver en regard l'une de l'autre sont dépolies avec un abrasif léger (environ un grain de 180).

Puis, on enroule deux tours de ruban de polytétrafluoroéthylène (PTFE) 106 autour de l'extrémité des tubes 4S, 102 de plus petit diamètre.

On engage ensuite fermement les tubes l'un dans l'autre avec un recouvrement supérieur à la largeur du ruban de téflon.

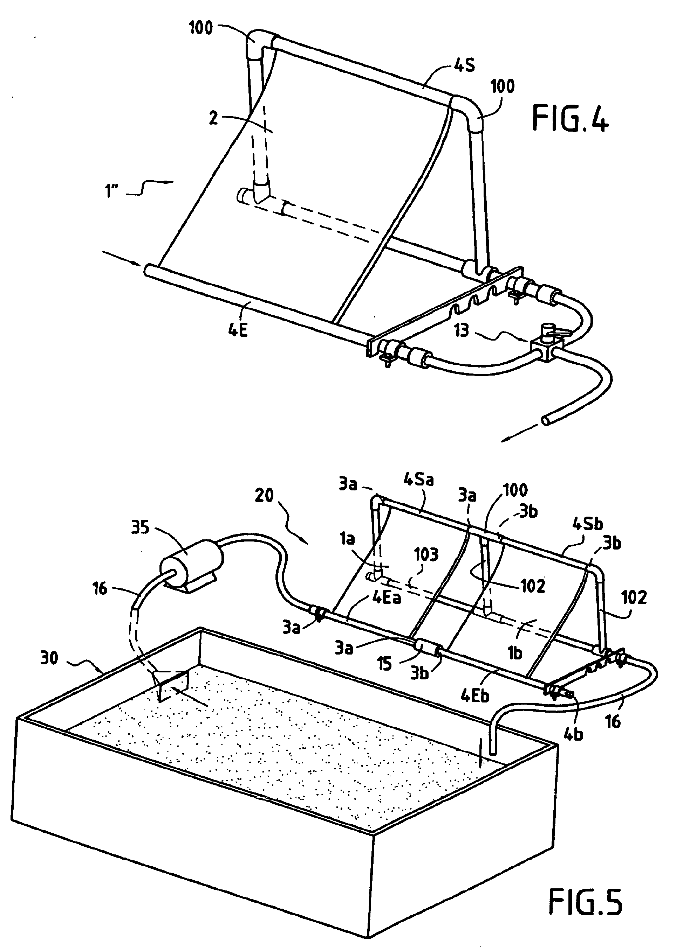

Nous allons maintenant décrire en référence à la **figure 4** un mode préféré de réalisation d'un dispositif 1" de chauffage selon l'invention, pouvant s'appliquer notamment aux variantes décrites précédemment.

Dans ce troisième mode de réalisation, le dispositif 1" comporte un moyen 13 de régulation de la température du fluide.

Dans le mode préféré de réalisation décrit ici, ce moyen 13 de régulation est constitué par une vanne mélangeuse thermostatique à deux entrées reliées respectivement du collecteur de connexion inférieur 4E (qui, dans ce mode à deux extrémités ouvertes) et à la sortie du dispositif 1.

La **figure 5** représente l'utilisation d'un système de chauffage 20 pour réchauffer l'eau d'une piscine 30 conformément à la présente invention.

Dans cet exemple décrit ici, le système de chauffage 20 comporte deux dispositifs de chauffage 1 a, 1 b tels que décrits précédemment en référence à la figure 1, reliés entre eux.

Plus précisément, la première extrémité ouverte 3a du collecteur de connexion inférieur 4Ea du premier dispositif de chauffage 1a est reliée à la piscine 30 par un tuyau 16, via un ensemble référencé 35 constituant pompe et filtre à eau.

La deuxième extrémité ouverte 3a du collecteur d'entrée 4Ea du premier dispositif 1a est reliée à un embout étanche 15.

Ce même embout étanche 15 est également relié à l'extrémité ouverte 3b du collecteur transversal d'entrée 4Eb du deuxième dispositif de chauffage 1 b.

Les quatre collecteurs de liaison 102 sont tous reliés au même collecteur de jonction 103 dont une extrémité libre permet de réinjecter l'eau réchauffée dans la piscine 30.

L'homme du métier comprendra que le dispositif de chauffage solaire selon l'invention constitue un dispositif d'échange thermique. En conséquence, il peut aussi être utilisé pour refroidir un fluide qui le traverse.

## Revendications

1. Dispositif de chauffage solaire d'un fluide relié à un réseau de circulation dudit fluide, ce dispositif comportant :
- une plaque (2) de polymère alvéolaire de couleur sombre et comportant des canaux (2a, 2b) de circulation dudit fluide, ces canaux étant sensiblement parallèles entre eux ;
- deux collecteurs de connexion (4E, 4S) rigides reliés de façon étanche, respectivement à l'entrée et à la sortie desdits canaux (2a, 2b) de circulation, et adaptés à rigidifier ladite plaque (2) de polymère alvéolaire transversalement par rapport auxdits canaux ; et
- un support (S3) constitué par une structure pivotante et repliable le long de ladite plaque (2),
**caractérisé en ce que** ledit support (S3) comporte un collecteur de liaison rigide (102) adapté à raccorder, par des moyens d'articulation étanches (100) dudit support (S3), un desdits collecteurs de connexion (4S) audit réseau de circulation de fluide.

2. Dispositif de chauffage solaire selon la revendication 1, **caractérisé en ce que** ledit support (S3) comporte deux collecteurs de liaison rigides (102), chacun d'entre eux étant raccordé :
- par une première extrémité, à une extrémité différente d'un premier collecteur de connexion (4S), par des moyens d'articulation étanche (S3) dudit support (S3); et
- par une deuxième extrémité, à un collecteur de jonction (103) relié au réseau de circulation de fluide , et **en ce que**
ledit collecteur de jonction (103) et le deuxième collecteur de connexion (4E) constituent une base stable dudit dispositif de chauffage.

3. Dispositif de chauffage selon la revendication 1 ou 2, **caractérisé en ce que** le support (S3) est adapté à conférer à ladite plaque (2) aux moins deux positions stables et d'inclinaisons différentes par rapport à l'horizontale.

4. Dispositif de chauffage selon l'une quelconque des revendications 1 à 3, **caractérisé en ce qu'**il comporte des moyens de réglage (5) adaptés à donner au moins deux valeurs prédéterminées à l'angle (β) défini entre ladite plaque de polymère (2) et l'horizontale.

5. Dispositif de chauffage selon l'une quelconque des revendications 1 à 4, **caractérisé en ce que** ledit moyen d'articulation étanche est un joint tournant étanche (100).

6. Dispositif de chauffage selon la revendication 5 dans lequel le premier collecteur de connexion (4S) et au moins un collecteur de liaison (102) sont des tubes en matière polymère thermoplastique, et en ce que au moins un desdits joints tournants étanche (100) comporte un tube coudé ou un Té en matière polymère thermoplastique dont le diamètre est différent de 0,1 mm au plus du diamètre desdits collecteurs (4S, 102), l'étanchéité entre le joint tournant et un collecteur (4E, 4S) étant réalisée par du ruban en polytétrafluoroéthylène (PTFE).

7. Dispositif de chauffage selon l'une quelconque des revendications 1 à 6, **caractérisé en ce que** ledit support (S3) est télescopique.

8. Dispositif de chauffage selon l'une quelconque des revendications 1 à 7, **caractérisé en ce qu'**il comporte des moyens (11) supplémentaires de rigidification de ladite plaque (2) de polymère.

9. Dispositif de chauffage selon l'une quelconque des revendications 1 à 8, **caractérisé en ce que** chacun desdits collecteurs de connexion (4E, 4S) comporte une rainure (6) débouchante dans laquelle est enfoncée ladite plaque (2) de polymère et des moyens pour assurer l'étanchéité entre ladite rainure (6) et ladite plaque (2).

10. Dispositif de chauffage selon la revendication 9, **caractérisé en ce que** lesdits moyens pour assurer l'étanchéité entre la plaque (2) de polymère et ladite rainure (6) comportent des éléments incompressibles d'épaisseur constante mélangés à une colle étanche, disposés de part et d'autre de ladite plaque.

11. Dispositif de chauffage selon l'une quelconque des revendications 1 à 10, **caractérisé en ce qu'**il comporte des moyens de cerclage d'au moins un collecteur de connexion (4E, 4S), ledit moyen de cerclage traversant la plaque alvéolaire (2) à proximité dudit collecteur pour renforcer l'assemblage entre la plaque (2) et ce collecteur (4E, 4S).

12. Dispositif de chauffage selon l'une quelconque des revendications 1 à 11, **caractérisé en ce qu'**il comporte des moyens (12) de fixation d'au moins un desdits collecteurs de connexion (4E) et/ou du support (S3).

13. Dispositif de chauffage selon l'une quelconque des revendications 1 à 12, **caractérisé en ce qu'**il comporte en outre un moyen (13) de régulation de la température dudit fluide, ledit moyen de régulation étant relié à au moins un des deux collecteurs transversaux, et éventuellement réglable et/ou automatisé.

14. Système de chauffage solaire d'un fluide, **caractérisé en ce qu'**il comporte au moins deux dispositifs (1) de chauffage selon l'une quelconque des revendications 1 à 13, reliés entre eux par des embouts (15) étanches.

15. Utilisation d'un dispositif (1) de chauffage selon l'une quelconque des revendications 1 à 13, ou d'un système de chauffage (20) selon la revendication 14, pour réchauffer l'eau d'une piscine (30).

16. Procédé de fabrication d'un dispositif selon la revendication 9, **caractérisé en ce que** pour réaliser ladite rainure (6) :
- on introduit un mandrin (110) à l'intérieur du collecteur de connexion en polymère thermoplastique (4S), ce mandrin comportant une entaille (112) aux dimensions sensiblement égales à celles de ladite rainure (6) ;
- on réchauffe la partie dudit collecteur (4S) située en vis-à-vis de ladite entaille (112) jusqu'à une température comprise entre sa température de transition vitreuse et sa température de fusion ;
- on presse une lame (114) adaptée à la forme de ladite rainure (6) au niveau de la partie réchauffée du collecteur et de l'entaille (112) du mandrin (110) jusqu'à l'obtention de ladite rainure (6).

## Claims

1. A device for solar heating a fluid connected to a circulation network, the device comprising:
- a plate (2) of cellular polymer of dark color and including flow channels (2a, 2b) for said fluid, the channels being substantially mutually parallel;
- two rigid connection ducts (4E, 4S) connected in leaktight manner respectively to the inlets and to the outlets of said flow channels (2a, 2b) and adapted to stiffen said plate (2) of cellular polymer transversely relative to said channels; and
- a support (S3) constituted by a pivoting structure that is foldable along said plate (2),
the device being **characterized in that** said support (S3) comprises a rigid connection duct (102) adapted to act, via leaktight hinge means (100) of said support (S3), to connect one of said connection ducts (4S) to said fluid circulation network.

2. A solar heater device according to claim 1, **characterized in that** said support (S3) has two rigid link ducts (102) each of which is connected:
- via a first end to a different end of a first connection duct (4S) by leaktight hinge means (S3) of said support (S3); and
- via a second end to a junction duct (103) connected to the fluid circulation network; and
**in that** said junction duct (103) and the second connection duct (4E) constitute a stable base for said heater device.

3. A heater device according to claim 1 or claim 2, **characterized in that** the support (S3) is adapted to confer on said plate (2) at least two stable positions with different inclinations relative to the horizontal.

4. A heater device according to any one of claims 1 to 3, **characterized in that** it includes adjustment means (5) adapted to give at least two predetermined values of the angle (β) defined between said polymer plate (2) and the horizontal.

5. A heater device according to any one of claims 1 to 4, **characterized in that** said leaktight hinge means comprise a leaktight rotary joint (100).

6. A heater device according to claim 5, wherein the first connection duct (4S) and at least one link duct (102) are tubes of thermoplastic polymer material, and in that at least one of said leaktight rotary joints (100) comprises a tube bend or a T of thermoplastic polymer material of diameter that differs by no more than 0.1 mm from the diameter of said ducts (4S, 102), sealing between the rotary joint and a duct (4E, 4S) being provided by a polytetrafluoroethylene (PTFE) tape.

7. A heater device according to any one of claims 1 to 6, **characterized in that** said support (S3) is telescopic.

8. A heater device according to any one of claims 1 to 7, **characterized in that** it includes additional means (11) for stiffening said polymer plate (2).

9. A heater device according to any one of claims 1 to 8, **characterized in that** each of said connection ducts (4E, 4S) includes an open slot (6) into which said polymer plate (2) is engaged, together with means for providing sealing between said slot (6) and said plate (2).

10. A heater device according to claim 9, **characterized in that** said means for providing sealing between the polymer plate (2) and said slot (6) include incompressible elements of constant thickness mixed with a sealing adhesive, disposed on either side of said plate.

11. A heater device according to any one of claims 1 to 10, **characterized in that** it includes means for binding around at least one connection duct (4E, 4S), said binding means passing through the cellular plate (2) close to said duct in order to reinforce the assembly between the plate (2) and said duct (4E, 4S).

12. A heater device according to any one of claims 1 to 11, **characterized in that** it includes fastener means (12) for fastening at least one of said connection ducts (4E) and/or the support (S3).

13. A heater device according to any one of claims 1 to 12, **characterized in that** it further includes regulator means (13) for regulating the temperature of said fluid, said regulator means being connected to at least one of the two transverse ducts, and possibly being adjustable and/or automated.

14. A system for solar heating a fluid, the system being **characterized in that** at least two heater devices (1) according to any one of claims 1 to 13, the devices being connected together by leaktight fittings (15).

15. The use of a heater device (1) according to any one of claims 1 to 14, or a heater system (20) according to claim 13, for heating the water of a swimming pool (30).

16. A method of fabricating a device according to claim 9, **characterized in that** in order to make said slot (6):
- a mandrel (110) is inserted inside the connection duct of thermoplastic polymer (4S), said mandrel including a notch (112) of dimensions substantially equal to the dimensions of said slot (6);
- heating the portion of said duct (4S) that is situated in register with said notch (112) up to a temperature lying between its glass transition temperature and its melting temperature; and
- pressing a blade (114) adapted to the shape of said slot (6) into the heated portion of the duct and the notch (112) in the mandrel (110) until said slot (6) is obtained.

## Patentansprüche

1. Vorrichtung zur solaren Erwärmung eines Fluids, die mit einem Netz zur Zirkulation des Fluids verbunden ist, wobei diese Vorrichtung umfaßt:
- eine Platte (2) aus wabenförmigem Polymer von dunkler Farbe und mit Kanälen (2a, 2b) zur Zirkulation des Fluids, wobei diese Kanäle im wesentlichen parallel zueinander verlaufen,
- zwei starre Anschlußsammelrohre (4E, 4S), die mit dem Eingang bzw. mit dem Ausgang der Zirkulationskanäle (2a, 2b) dicht verbunden sind und die geeignet sind, die Platte (2) aus wabenförmigem Polymer quer zu den Kanälen zu versteifen, sowie
- einen Träger (S3), der von einer schwenkbaren und entlang der Platte (2) zusammenklappbaren Struktur gebildet ist,
**dadurch gekennzeichnet, daß** der Träger (S3) ein starres Verbindungssammelrohr (102) umfaßt, das geeignet ist, eines der Anschlußsammelrohre (4S) durch dichte Gelenkmittel (100) des Trägers (S3) mit dem Fluidzirkulationsnetz zu verbinden.

2. Solarerwärmungsvorrichtung nach Anspruch 1, **dadurch gekennzeichnet, daß** der Träger (S3) zwei starre Verbindungssammelrohre (102) umfaßt, wobei ein jedes von ihnen angeschlossen ist:
- mit einem ersten Ende, über Mittel zum dichten Anlenken des Trägers (S3), an ein unterschiedliches Ende eines ersten Anschlußsammelrohrs (4S), und
- mit einem zweiten Ende an ein Verbindungssammelrohr (103), das mit dem Fluidzirkulationsnetz verbunden ist, und daß
das Verbindungssammelrohr (103) und das zweite Anschlußsammelrohr (4E) eine stabile Basis der Erwärmungsvorrichtung bilden.

3. Erwärmungsvorrichtung nach Anspruch 1 oder 2, **dadurch gekennzeichnet, daß** der Träger (S3) geeignet ist, der Platte (2) wenigstens zwei stabile Positionen mit unterschiedlichen Neigungen gegenüber der Horizontalen zu verleihen.

4. Erwärmungsvorrichtung nach einem der Ansprüche 1 bis 3, **dadurch gekennzeichnet, daß** sie Einstellmittel (5) umfaßt, die geeignet sind, dem Winkel (β), der zwischen der Polymerplatte (2) und der Horizontalen definiert ist, wenigstens zwei vorbestimmte Werte zu geben.

5. Erwärmungsvorrichtung nach einem der Ansprüche 1 bis 4, **dadurch gekennzeichnet, daß** das Mittel zum dichten Anlenken eine dichte Drehverbindung (100) ist.

6. Erwärmungsvorrichtung nach Anspruch 5, wobei das erste Anschlußsammelrohr (4S) und wenigstens ein Verbindungssammelrohr (102) Rohre aus thermoplastischem Polymermaterial sind und daß wenigstens eine der dichten Drehverbindungen (100) ein Kniestück oder ein T-Stück aus thermoplastischem Polymermaterial umfaßt, dessen Durchmesser höchstens um 0,1 mm von dem Durchmesser der Sammelrohre (4S, 102) abweicht, wobei die Dichtigkeit zwischen der Drehverbindung und einem Sammelrohr (4E, 4S) mittels Band aus Polytetrafluorethylen (PTFE) hergestellt ist.

7. Erwärmungsvorrichtung nach einem der Ansprüche 1 bis 6, **dadurch gekennzeichnet, daß** der Träger (S3) teleskopartig ausgebildet ist.

8. Erwärmungsvorrichtung nach einem der Ansprüche 1 bis 7, **dadurch gekennzeichnet, daß** sie zusätzliche Mittel (11) zum Versteifen der Polymerplatte (2) umfaßt.

9. Erwärmungsvorrichtung nach einem der Ansprüche 1 bis 8, **dadurch gekennzeichnet, daß** ein jedes der Anschlußsammelrohre (4E, 4S) eine durchgehende Nut (6), in die die Polymerplatte (2) eingefügt ist, sowie Mittel zur Gewährleistung der Dichtigkeit zwischen der Nut (6) und der Platte (2) umfaßt.

10. Erwärmungsvorrichtung nach Anspruch 9, **dadurch gekennzeichnet, daß** die Mittel zur Gewährleistung der Dichtigkeit zwischen der Polymerplatte (2) und der Nut (6) nicht zusammendrückbare Elemente mit konstanter Dicke, die mit einem dichten Kleber gemischt sind, umfassen, welche auf beiden Seiten der Platte angeordnet sind.

11. Erwärmungsvorrichtung nach einem der Ansprüche 1 bis 10, **dadurch gekennzeichnet, daß** sie Mittel zum Umschlingen wenigstens eines Anschlußsammelrohrs (4E, 4S) umfaßt, wobei das Umschlingungsmittel die Wabenplatte (2) in der Nähe des Sammelrohrs durchgreift, um die Verbindung zwischen der Platte (2) und diesem Sammelrohr (4E, 4S) zu verstärken.

12. Erwärmungsvorrichtung nach einem der Ansprüche 1 bis 11, **dadurch gekennzeichnet, daß** sie Mittel (12) zum Befestigen wenigstens eines der Anschlußsammelrohre (4E) und/oder des Trägers (S3) umfaßt.

13. Erwärmungsvorrichtung nach einem der Ansprüche 1 bis 12, **dadurch gekennzeichnet, daß** sie ferner ein Mittel (13) zum Regulieren der Temperatur des Fluids umfaßt, wobei das Regulierungsmittel mit wenigstens einem der beiden Quersammelrohre verbunden ist und eventuell einstellbar und/oder automatisiert ist.

14. System zur solaren Erwärmung eines Fluids, **dadurch gekennzeichnet, daß** es wenigstens zwei Erwärmungsvorrichtungen (1) nach einem der Ansprüche 1 bis 13 umfaßt, die durch dichte Anschlußstücke (15) untereinander verbunden sind.

15. Verwendung einer Erwärmungsvorrichtung (1) nach einem der Ansprüche 1 bis 13 oder eines Erwärmungssystems (20) nach Anspruch 14 zum Wiedererwärmen des Wassers eines Schwimmbeckens (30).

16. Verfahren zur Herstellung einer Vorrichtung nach Anspruch 9, **dadurch gekennzeichnet, daß** zur Ausbildung der Nut (6):
- ein Dorn (110) in das Anschlußsammelrohr aus thermoplastischem Polymer (4S) eingeführt wird, wobei dieser Dorn eine Kerbe (112) mit Abmessungen, die im wesentlichen gleich denjenigen der Nut (6) sind, aufweist,
- der Teil des Sammelrohrs (4S), welcher der Kerbe (112) gegenüberliegt, bis auf eine Temperatur erhitzt wird, die zwischen seiner Glasübergangstemperatur und seiner Schmelztemperatur liegt,
- eine Leiste (114), welche der Form der Nut (6) angepaßt ist, im Bereich des erhitzten Teils des Sammelrohrs und der Kerbe (112) des Dorns (110) bis zum Erhalt der Nut (6) eingepreßt wird.
